# EUROPÄISCHE PATENTSCHRIFT

(11) **EP 2 918 446 B1**
(45) Veröffentlichungstag und Bekanntmachung des Hinweises auf die Patenterteilung: **08.05.2019**
(21) Anmeldenummer: 15000678.1
(22) Anmeldetag: 09.03.2015
(51) Int. Cl.: B60Q 1/04, B60Q 1/14

(54) **SYSTEM UND VERFAHREN ZUR STEUERUNG EINES FAHRZEUGSCHEINWERFERS**
SYSTEM AND METHOD FOR CONTROLLING A VEHICLE HEADLIGHT
SYSTÈME ET PROCÉDÉ DE COMMANDE D'UN PHARE DE VÉHICULE

(30) Priorität: 12.03.2014 DE 102014003544
(43) Veröffentlichungstag der Anmeldung: 16.09.2015
(73) Patentinhaber: AUDI AG, 85045 Ingolstadt (DE)
(72) Erfinder: Funk, Christian, 92339 Beilngries (DE); Barmeyer, Florenz, 02763 Zittau (DE)
(74) Vertreter: Thielmann, Frank

(56) Entgegenhaltungen:
- EP-A2- 2 674 326
- WO-A1-2009/027221
- DE-A1-102006 003 646
- DE-A1-102007 012 834
- DE-A1-102009 054 227

## Beschreibung

Die vorliegende Erfindung betrifft ein System und eine Verfahren zur Steuerung eines Fahrzeugscheinwerfers.

Zur Beleuchtung des einem Kraftfahrzeug hauptsächlich in Fahrrichtung vorausliegenden Bereichs weisen Kraftfahrzeuge in ihrem Frontbereich bekanntermaßen eine Fahrzeuglichtanlage mit einem Fahrlicht auf, durch die wenigstens die Lichtfunktionen Standlicht, Abblendlicht und Fernlicht realisierbar sind.

Das für das Fahren eines Kraftfahrzeugs vorgesehene Abblendlicht stellt einen Kompromiss dar, mit dem verschiedenen Aspekten Rechnung getragen werden muss. Das Abblendlicht ist asymmetrisch ausgeführt und bei Rechtsverkehr auf der linken Hälfte um 1% vertikal beschnitten.

Durch die Höhenbegrenzung des Abblendlichts wird eine Blendung des Gegenverkehrs und von vorausfahrenden Verkehrsteilnehmern vermieden. Diese Begrenzung der Höhe des Abblendlichts führt gleichzeitig zu einer oftmals unerwünschten Begrenzung der Ausleuchtung der Fahrzeugumgebung. Auch stellt das Abblendlicht lediglich einen Kompromiss für unterschiedliche Straßenklassen dar.

Eine Erweiterung der Lichtverteilung des Abblendlichts stellt das Fernlicht dar, welche die Beleuchtung über den Abblendlichtbereich hinaus darstellt. Durch die Ausrichtung der Lichtverteilung des Fernlichts kann dieses aber nur dann aktiviert werden, wenn sich kein anderer Verkehrsteilnehmer im Blendbereich befindet.

Moderne adaptive Fernlichtsysteme beheben diesen Nachteil, indem beispielsweise mit Hilfe einer Kamera entgegenkommende oder vorausfahrende, beleuchtete Fahrzeuge detektiert und die Reichweite der Scheinwerfer automatisch an die Entfernung dieser Fahrzeuge angepasst wird, so dass der Scheinwerferkegel vor diesen Fahrzeugen endet. Ebenso sind Systeme bekannt, bei denen das Fernlicht immer eingeschaltet bleibt. Erkennt das System mit Hilfe einer Kamera Gegenverkehr oder vorausfahrenden Verkehr, passt es die Lichtverteilung mit Hilfe eines Abschatters automatisch entsprechend an.

Eine weitere Entwicklung der vergangenen Jahre zur Verbesserung der Ausleuchtung eines einem Kraftfahrzeug im Wesentlichen vorausliegenden Bereichs, d.h. insbesondere der vorausliegenden Fahrbahn, befasste sich mit der Thematik des adaptiven Kurvenlichts, das mithilfe eines um eine Hochachse drehbaren Scheinwerfers realisiert wird.

Neuartige adaptive Fernlichtsysteme auf Basis von Voll-LED-Scheinwerfern besitzen wenigstens pro horizontalem Winkelbereich ein oder mehrere LEDs (lichtemittierende Dioden), die nur diesen Winkelbereich ausleuchten. Wird ein anderer Verkehrsteilnehmer durch eine Kamera, die beispielsweise zwischen dem Innenspiegel und der Frontscheibe angebracht ist, in diesem Bereich erkannt, werden die LEDs ausgeschaltet und der Verkehrsteilnehmer dadurch nicht mehr geblendet.

Die DE 10 2009 054 227 A1 beschreibt, im Einklang mit den jeweiligen Oberbegriffen von den Ansprüchen 1 unfd 7, ein Verfahren zum Steuern einer Scheinwerferanordnung für ein Fahrzeug, wobei die Scheinwerferanordnung zwei beabstandete Scheinwerfer aufweist, bei dem Verkehrsteilnehmer in Fahrtrichtung vor dem Fahrzeug erfasst werden und eine erste Gesamtlichtverteilung erzeugbar ist, bei der die Leuchtweite auf einer ersten Seite einer Mittelachse größer ist als auf der anderen, zweiten Seite dieser Mittelachse, und eine zweite Gesamtlichtverteilung erzeugbar ist, bei der die Gesamtlichtverteilung so regelbar ist, dass sie in Richtung zumindest eines erfassten Verkehrsteilnehmers eine Leuchtweite aufweist, die geringer als der Abstand zu dem erfassten Verkehrsteilnehmer ist, und die in einer anderen Richtung eine Leuchtweite aufweist, die größer als der Abstand zu dem erfassten Verkehrsteilnehmer ist. Hierbei kann das Fahrverhalten ermittelt und bei einem Wechsel von einer Gesamtlichtverteilung zu einer anderen Gesamtlichtverteilung das Zeitintervall für den Übergang von der einen Gesamtlichtverteilung zu der anderen Gesamtlichtverteilung in Abhängigkeit von dem Fahrverhalten bestimmt werden. Das Zeitintervall wird umso kürzer gewählt, desto größer die Fahrdynamik, d. h. insbesondere desto größer die Beschleunigung ist. Hierdurch wird eine Anpassung der Übergangszeiten an die Fahrdynamik erreicht, welche für den Nutzer zu einem angenehm empfundenen Wechsel zwischen den Gesamtlichtverteilungen führt.

Und aus der DE 10 2007 012 834 A1 ist ein Verfahren zur Realisierung einer Kurvenlichtfunktion eines Fahrzeugscheinwerfers bekannt, wobei der Fahrzeugscheinwerfer ein Lichtmodul zur Erzeugung eines Lichtkegels umfasst, wobei das Lichtmodul derart um eine im Wesentlichen vertikale Schwenkachse verschwenkbar ist, dass die Richtung des den Scheinwerfer verlassenden Lichtkegels an einen Verlauf einer Fahrbahn, auf der sich das Fahrzeug bewegt, angepasst wird. Um die Kurvenlichtfunktion besser an das subjektive Empfinden des Fahrers anpassen zu können, kann die Schwenkgeschwindigkeit des Lichtmoduls in Abhängigkeit von der Fahrweise des Fahrers des Fahrzeugs verändert werden. Insbesondere kann nicht lediglich ein fest vorgegebener Parametersatz, sondern können mehrere Parametersätze zur Verfügung stehen, aus denen in Abhängigkeit von der ermittelten Fahrweise des Fahrers einer ausgewählt und zur Ermittlung der Verschwenkbewegung des Lichtmoduls herangezogen wird.

Es ist Aufgabe der vorliegenden Erfindung, Nachteile des Stands der Technik zu überwinden. Diese Aufgabe wird gelöst durch das System gemäß Anspruch 1 und das Verfahren gemäß Anspruch 7. Vorteilhafte Weiterbildungen der Erfindung sind Gegenstand der Unteransprüche.

Erfindungsgemäß wird ein System mit einem Fahrzeugscheinwerfer zur Beleuchtung eines Umfelds eines Kraftfahrzeugs und einem mit dem Fahrzeugscheinwerfer verbundenen Steuergerät vorgeschlagen, wobei der Fahrzeugscheinwerfer wenigstens eine Halbleiter-Lichtquelle pro vorgegebenem, horizontalem Winkelbereich zur Erzeugung eines Fahrlichts aufweist und das Steuergerät dazu eingerichtet ist, Halbleiter-Lichtquellen zur Realisierung von wenigstens einer Lichtfunktion des Fahrlichts individuell ein- und ausschalten zu können.

Das erfindungsgemäße System ist dadurch gekennzeichnet, dass das Steuergerät weiter dazu eingerichtet ist, verschiedenen Fahrprofilen zugeordnete Parametersätze mit Parametern für wenigstens den Vorgang des Ein- und Ausschaltens von Halbleiter-Lichtquellen zur Realisierung von wenigstens einer Lichtfunktion zu verwenden, und in dem Steuergerät mehrere verschiedene Fahrprofile gespeichert sind, die verschiedenen Fahrzeugabstimmungen zugeordnet sind, und durch den Fahrzeugführer durch eine Bedienhandlung bei einem Fahrzeugabstimmungs-Assistenzsystem eine Fahrzeugabstimmung auswählbar ist.

Lichtbasierte Fahrerassistenzsysteme nach dem Stand der Technik besitzen oftmals keine Schnittstelle zwischen der Fahrweise eines Fahrzeugführers und der Ansteuerung der Lichtfunktionen. Die Einstellung des Lichtes erfolgt bei derartigen Fahrerassistenzsystemen daher immer mit den gleichen Hysteresen und Verzögerungszeiten. Das bedeutet beispielsweise, dass bei einem sportlichen Fahrzeugführer nach einem Abblenden des Fernlichts für das erneute Aufblenden des Fernlichtes durch ein Kraftfahrzeug die gleiche Zeit benötigt wird, wie bei einem eher gemäßigtem Fahrzeugführer. Da ein sportlicher Fahrzeugführer aber mit höheren Quer- und Längsbeschleunigungen sowie mit höheren Geschwindigkeiten fährt, ist die zurückgelegte Strecke, in der das Fernlicht nicht aufgeblendet ist, größer als bei einem langsam fahrenden Fahrzeugführer. Dies wird oftmals als nachteilig empfunden.

Dieser Nachteil des Stands der Technik wird durch die vorliegende Erfindung überwunden oder doch stark verringert.

Gemäß einer ersten vorteilhaften Weiterbildung des Systems sind verschiedenen Fahrprofilen zugeordnete Parametersätze durch das Steuergerät generierbar.

Gemäß einer zweiten vorteilhaften Weiterbildung des Systems sind in den Parametersätzen als Parameter zur Realisierung von wenigstens einer Lichtfunktion wenigstens der Zeitraum zwischen dem Vorhandensein eines Einschaltkriteriums und dem Einschalten von Halbleiter-Lichtquellen und/oder der Zeitraum zwischen dem Vorhandensein eines Ausschaltkriteriums und dem Ausschalten von Halbleiter-Lichtquellen enthalten.

Gemäß einer weiteren vorteilhaften Weiterbildung des Systems unterscheiden sich die verschiedenen, jeweils einem Fahrprofil zugeordneten Parametersätze in wenigstens einem Parameter voneinander.

Weitere Vorteile ergeben sich, wenn bei dem System das Steuergerät dazu eingerichtet ist, das Fahrprofil des Fahrzeugführers während einer Fahrt des Kraftfahrzeugs aufgrund von Daten von wenigstens einer fahrzeugseitigen Einrichtung zu erkennen.

Durch das System kann in vorteilhafter Weise weiter als die wenigstens eine Lichtfunktion ein adaptives Fernlicht, ein adaptives Ortschaftserkennungslicht, ein adaptives Kurvenlicht, eine adaptive Leuchtweitenregulierung und/oder ein adaptives Markierungslicht realisierbar sein.

Die vorliegende Erfindung umfasst auch ein Verfahren zur Steuerung eines Fahrzeugscheinwerfers zur Beleuchtung eines Umfelds eines Kraftfahrzeugs durch ein System mit einem Fahrzeugscheinwerfer und einem damit verbundenen Steuergerät, in dem mehrere verschiedene Fahrprofile gespeichert sind, die verschiedenen Fahrzeugabstimmungen zugeordnet sind, wobei der Fahrzeugscheinwerfer wenigstens eine Halbleiter-Lichtquelle pro vorgegebenem, horizontalem Winkelbereich zur Erzeugung eines Fahrlichts aufweist und das Steuergerät dazu eingerichtet ist, Halbleiter-Lichtquellen zur Realisierung von wenigstens einer Lichtfunktion des Fahrlichts individuell einschalten und ausschalten zu können.

Das Verfahren ist dadurch gekennzeichnet, dass es die Schritte umfasst:
- Auswählen einer Fahrzeugabstimmung durch den Fahrzeugführer durch eine Bedienhandlung bei einem Fahrzeugabstimmungs-Assistenzsystems,
- Auswählen eines dem ausgewählten Fahrprofil zugeordneten Parametersatz mit Parametern für wenigstens den Vorgang des Ein- und Ausschaltens von Halbleiter-Lichtquellen durch das Steuergerät, und
- Ein- und Ausschalten von Halbleiter-Lichtquellen des Fahrzeugscheinwerfers durch das Steuergerät während einer Fahrt des Kraftfahrzeugs auf Grundlage der in dem ausgewählten Fahrprofil zugeordneten Parametersatz enthaltenen Parametern für das Einschalten und Ausschalten von Halbleiter-Lichtquellen zur Realisierung der Lichtfunktion(en) von wenigstens einem adaptiven Fernlicht, einem adaptiven Ortschaftserkennungslicht, einem adaptiven Kurvenlicht, einer adaptiven Leuchtweitenregulierung und/oder einem adaptiven Markierungslicht.

Gemäß einer vorteilhaften Weiterbildung des erfindungsgemäßen Verfahrens unterscheiden sich die verschiedenen, jeweils einem Fahrprofil zugeordneten Parametersätze in wenigstens einem Parameter voneinander.

Weitere Ausführungsformen und Weiterbildungen des Verfahrens, die Gegenstand der vorliegenden Erfindung und Anmeldung sind, ergeben sich aus der Beschreibung des erfindungsgemäßen Systems, seinen Ausführungsformen und Weiterbildungen, die für das erfindungsgemäße Verfahren entsprechend gelten.

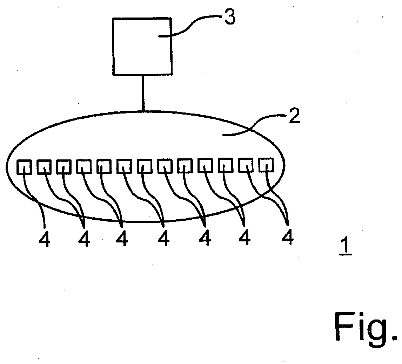

Die vorliegende Erfindung wird anhand der beigefügten Zeichnung näher erläutert.

Die Figur zeigt in schematischer Ansicht einer Ausführungsform des erfindungsemäßen Systems.

Die Darstellungen in der Figur sind rein schematisch und nicht maßstabsgerecht. Innerhalb der Figur sind gleiche oder ähnliche Elemente mit gleichen Bezugszeichen versehen.

Die nachfolgend erläuterten Ausführungsbeispiele stellen bevorzugte Ausführungsformen der vorliegenden Erfindung dar. Die vorliegende Erfindung ist selbstverständlich nicht auf diese Ausführungsformen beschränkt.

Wie in der Figur schematisch dargestellt ist, weist das erfindungsgemäße System 1 einen Fahrzeugscheinwerfer 2 zur Beleuchtung eines Umfelds eines Kraftfahrzeugs und ein mit dem Fahrzeugscheinwerfer 2 verbundenes Steuergerät 3 auf. Der Fahrzeugscheinwerfer 2 weist wenigstens eine Halbleiter-Lichtquelle 4 pro vorgegebenem, horizontalem Winkelbereich zur Erzeugung eines Fahrlichts auf und das Steuergerät 3 ist dazu eingerichtet, Halbleiter-Lichtquellen 4 zur Realisierung von wenigstens einer Lichtfunktion des Fahrlichts individuell ein- und ausschalten zu können.

Bei dem erfindungsgemäßen System 1 ist das Steuergerät 3 weiter dazu eingerichtet, verschiedenen Fahrprofilen zugeordnete Parametersätze mit Parametern für wenigstens den Vorgang des Ein- und Ausschaltens von Halbleiter-Lichtquellen 4 zur Realisierung von wenigstens einer Lichtfunktion zu verwenden.

Die vorliegende Erfindung geht aus einem Fahrzeugscheinwerfer 2, der wenigstens eine Halbleiter-Lichtquelle 4 pro vorgegebenem, horizontalem Winkelbereich zur Erzeugung eines Fahrlichts aufweist. Bei einem derartigen Fahrzeugscheinwerfer 2, der auch als Matrix-Fahrzeugscheinwerfer bezeichnet wird, können insbesondere die für ein Fernlicht vorgesehenen Halbleiter-Lichtquellen 4 individuell derart angesteuert werden, dass das Fernlicht automatisch in einem relevanten Bereich abgeblendet wird, die restliche Umgebung jedoch optimal ausgeleuchtet wird. Diese Lichtfunktion wird auch als adaptives Fernlicht bezeichnet.

Die Anzahl und die Anordnung der Halbleiter-Lichtquellen 4 und der/die vorgegebene(n) Winkelbereich(e) ist/sind nicht besonders beschränkt und kann/können jeden geeigneten oder benötigten Wert aufweisen. Auch der Winkelbereich, der insgesamt von einem Fahrzeugscheinwerfer 2 mithilfe der Halbleiter-Lichtquellen 4 angeleuchtet werden kann, ist nicht besonders beschränkt und kann jeden geeigneten Wert aufweisen.

Zur Realisierung eines adaptiven Fernlichts können bspw. entgegenkommende und vorausfahrende Fahrzeuge anhand ihrer Frontscheinwerfer und Heckleuchten von einem Kamerasystem, das beispielsweise zwischen dem Innenrückspiegel und der Frontscheibe angeordnet ist, erkannt werden und daraufhin die entsprechenden Halbleiter-Lichtquellen 4 so angesteuert werden, dass das Fernlicht die Insassen von entgegenkommenden und vorausfahrenden Fahrzeugen nicht blendet, die restliche Umgebung jedoch optimal ausgeleuchtet bleibt.

Eine weitere Lichtfunktion, die mit einem Matrix-Fahrzeugscheinwerfer 2 realisierbar ist, ist eine Ortschaftserkennung bzw. ein Ortschaftserkennungslicht mit einer entsprechenden Anpassung des durch den Matrix-Fahrzeugscheinwerfer 2 erzeugten Fernlichts. Hierbei kann über Positionsdaten des Kraftfahrzeugs, die bspw. mittels eines satellitengestützten Positionsbestimmungssystems erhältlich sind, und Abgleich der Positionsdaten mit Daten einer digitalen Straßenkarte, wie sie bspw. in einem Navigationssystem vorhanden ist, erkannt werden, ob sich ein Kraftfahrzeug vor einer Ortsein- und/oder -ausfahrt befindet. Alternativ oder ergänzend können von einem fahrzeugseitigen Kamerasystem eine Straßenbeleuchtung und/oder Ortseingangs- und Ortsausgangs-Schilder erkannt werden.

Wird durch eine der oben genannten Verfahren erkannt, dass sich ein Kraftfahrzeug vor einer Ortseinfahrt oder einer Ortsausfahrt befindet, kann bei einer Ortseinfahrt das Fernlicht bspw. in einer Art Vorhangeffekt von außen zur Mitte abgedimmt und bei einer Ortsausfahrt bspw. von der Mitte nach außen aufgedimmt werden. Außerhalb einer Ortschaft kann hierdurch durch das erfindungsgemäße System auch ein "Landstraßenlicht" realisiert werden.

Mittels Matrix-Fahrzeugscheinwerfern 2 kann auch ein adaptives bzw. synthetisches Kurvenlicht realisiert werden. Hierbei wird aufgrund einer Lenkbewegung der Lichtschwerpunkt des Fernlichts in die Kurvenrichtung verlagert. Das Kurvenlicht wird hierbei durch Ausschalten/Dimmen von kurvenaußenliegenden Halbleiter-Lichtquellen 4 und Einschalten/Aufdimmen von kurveninnenliegenden Halbleiter-Lichtquellen 4 realisiert.

Auch ein sogenanntes Markierungslicht lässt sich mithilfe von Matrix-Fahrzeugscheinwerfern 2 realisieren. Werden beispielsweise am Straßenrand befindliche Personen von einem fahrzeugseitigen Kamerasystem (bspw. AUDI Night-Vision-Kamerasystem) erkannt, können unter Einbeziehung von dem Steuergerät 3 zur Verfügung stehenden Informationen, wie beispielsweise Fahrzeuggeschwindigkeit und Entfernung des Kraftfahrzeugs zu der erkannten Person, entsprechende Halbleiter-Lichtquellen 4 derart angesteuert werden, dass eine gezielte Anleuchtung der Person erfolgt. Hierbei kann weiter vorgesehen sein, dass die entsprechenden Halbleiter-Lichtquellen 4 mehrmals ein- und ausgeschaltet werden und durch ein solches mehrmalige Auf- und Abblenden sowohl der Fahrzeugführer als auch die erkannte Person auf die potentielle Gefahr aufmerksam gemacht werden.

Ein großer Vorteil von Matrix-Fahrzeugscheinwerfern 2 ist, dass für die Realisierung all der genannten Lichtfunktionen keinerlei mechanische Verstellungen bei dem Fahrzeugscheinwerfer 2 oder von Elementen des Fahrzeugscheinwerfers 2 (Reflektoren, Linsen, Halbleiter-Lichtquellen, etc.) erforderlich sind.

Wie oben bereits erwähnt, ist bei vielen bisher bekannten adaptiven Fernlichtsystemen nachteilig, dass für die verschiedenen automatischen Lichtfunktionen für alle Fahrsituationen die gleichen Parameter bzw. Parametersätze verwendet werden, d.h. dass die Einstellung bzw. Verstellung des Lichtes bei diesen Fernlichtsystemen immer mit den gleichen Hysteresen und Verzögerungszeiten erfolgt.

Dieser Nachteil kann überwunden oder doch stark verringert werden, wenn - wie dies erfindungsgemäß vorgesehen ist - das Steuergerät 3, mit Hilfe dessen die Ansteuerung der einzelnen Halbleiter-Lichtquellen 4 erfolgt, dazu eingerichtet ist, zur Realisierung von wenigstens einer Lichtfunktion einen einem Fahrprofil zugeordneten Parametersatz mit Parametern für wenigstens den Vorgang des Ein- und Ausschaltens von Halbleiter-Lichtquellen 4 zu verwenden.

Die Fahrweise von verschiedenen Fahrzeugführern unterscheidet sich bekanntermaßen voneinander. Auch kann ein und derselbe Fahrzeugführer je nach verwendetem Kraftfahrzeug und/oder gegebener Situation (Verkehrssituation, Straßenklasse, Eile, Stress, etc.) einen unterschiedlichen Fahrstil zeigen.

Die unterschiedlichen Fahrstile oder anders ausgedrückt die unterschiedlichen Fahrprofile lassen sich anhand von charakteristischen Kenngrößen voneinander unterscheiden, bspw. der Fahrzeuggeschwindigkeit, den Beschleunigungs- und Verzögerungswerten, den gefahrenen Kurvengeschwindigkeiten, den maximalen und mittleren Motordrehzahlen, dem Bremsdruck, der Bremshäufigkeit, dem Zeitraum zwischen Bremsbetätigung und Gaspedalbetätigung, der Anzahl der Gangwechsel pro Zeiteinheit, der Gierrate, der Lenkwinkeländerungsgeschwindigkeit, der Anzahl und der Dauer von Rollvorgängen im Schubbetrieb, etc.

Anhand der genannten Kenngrößen lassen sich, bspw. mithilfe geeigneter Algorithmen oder Computerprogramme, "charakteristische" Fahrprofile erstellen bzw. erkennen, bspw. je ein Fahrprofil für eine sportliche, komfortbetonte und energiesparende Fahrweise, etc. Diese Fahrprofile unterscheiden sich jeweils in wenigsten einer der genannten Kenngrößen, wenigstens einem Kenngrößenbereich, wenigstens einer Kenngrößenlinie, etc. voneinander.

Jedem Fahrprofil kann ein Parametersatz zugeordnet werden, der "passende" Parameter für die Steuerung der Halbleiter-Lichtquellen 4 zur Erzeugung einer gewünschten Lichtfunktion(en) enthält und durch das Steuergerät 3 des Systems 1 werden verschiedenen Fahrprofilen zugeordnete Parametersätze mit Parametern für wenigstens den Vorgang des Ein- und Ausschaltens von Halbleiter-Lichtquellen 4 zur Realisierung von wenigstens einer Lichtfunktion verwendet.

Das Steuergerät 3 kann in einem einfachen Fall bspw. einen Parametersatz für ein "Standard-Fahrprofil" gespeichert haben, wie er auch von den Lösungen gemäß dem Stand der Technik verwendet wird, und einen weiteren Parametersatz für ein von dem "Standard-Fahrprofil" abweichendes Fahrprofil (bspw. "sportliches Fahrprofil") gespeichert haben oder generieren können, der wenigstens einen vom "Standard-Parametersatz" abweichenden Parameter aufweist.

Die Parametersätze enthalten in vorteilhafter Weise als Parameter zur Realisierung von wenigstens einer Lichtfunktion wenigstens den Zeitraum zwischen dem Vorhandensein eines Einschaltkriteriums und dem Einschalten von Halbleiter-Lichtquellen 4 und/oder den Zeitraum zwischen dem Vorhandensein eines Ausschaltkriteriums und dem Ausschalten von Halbleiter-Lichtquellen.

Je nach zu realisierender Lichtfunktion können unterschiedliche Einschaltkriterien und/oder Ausschaltkriterien gegeben sein und es können auch unterschiedliche Zeiträume für das Einschalten von Halbleiter-Lichtquellen und/oder das Ausschalten von Halbleiter-Lichtquellen ab dem Vorhandensein eines Einschalt- oder Ausschaltkriteriums in den jeweiligen Parametersätzen berücksichtigt sein.

Als Einschaltkriterium können bspw. vorgesehen sein: Erkennen, dass sich kein entgegenkommendes und/oder vorausfahrendes Fahrzeug im Ausleuchtbereich des Fernlichts befindet (adaptives Fernlicht); Erkennen, dass sich ein Kraftfahrzeug kurz vor einer Ortsausfahrt befindet (Ortschaftserkennung); Erkennen des Endes einer Kurvenfahrt oder Erkennen des Beginns einer Geradeausfahrt (adaptives bzw. synthetisches Kurvenlicht); Erkennen einer Person am Straßenrand im oder kurz vor dem Ausleuchtbereich des Fernlichts (Markierungslicht).

Und als Beispiele für Ausschaltkriterien seien hier erwähnt: Erkennen eines entgegenkommenden und/oder vorausfahrenden Fahrzeugs im oder kurz vor dem Ausleuchtbereich des Fernlichts (adaptives Fernlicht); Erkennen, dass sich ein Kraftfahrzeug kurz vor einer Ortseinfahrt befindet (Ortschaftserkennung); Erkennen des Beginns einer Kurvenfahrt (adaptives bzw. synthetisches Kurvenlicht); Erkennen, dass sich keine Person (mehr) am Straßenrand im oder kurz vor dem Ausleuchtbereich des Fernlichts befindet (Markierungslicht).

Die obige Aufzählung an möglichen Einschaltkriterien und Ausschaltkriterien ist nicht abschließend zu verstehen und es können weitere Einschaltkriterien und Ausschaltkriterien gewählt werden. Entsprechendes gilt auch, wenn durch das System 1 weitere, oben nicht erwähnte Lichtfunktionen realisiert werden sollen.

Die Parametersätze unterscheiden sich in Abhängigkeit von dem ihnen jeweils zugeordneten Fahrprofil insbesondere in Bezug auf die Länge der Zeiträume für das Einschalten von Halbleiter-Lichtquellen und/oder das Ausschalten von Halbleiter-Lichtquellen ab dem Vorhandensein eines Einschalt- oder Ausschaltkriteriums. Auch können unterschiedliche lange Zeitdauern vorgesehen sein, die bspw. für einen Dimmvorgang (bspw. von einem ausgeschalteten Zustand einer Halbleiter-Lichtquelle 4 bis zu einer vollen Lichtstärke der Halbleiter-Lichtquelle 4, den umgekehrten Vorgang, dem teilweisen Auf- bzw. Abdimmen einer Halbleiter-Lichtquelle 4), für eine Verbreiterung oder Verschmälerung der Breite des Lichtkegels bei einer Ortschaftserkennung, für das Auf- und Abblenden bei einer erkannten Person (Markierungslicht), etc. vorgesehen sein.

Die Parameter für die einzelnen Lichtfunktionen sind in den einzelnen Parametersätzen so gewählt, dass sie zu dem jeweils zugeordneten Fahrprofil "passen".

So kann bspw. bei dem Parametersatz, der dem Fahrprofil "sportliche Fahrweise" zugeordnet ist, vorgesehen sein, dass der Zeitraum zwischen dem Vorhandensein eines Einschalt- oder Ausschaltkriteriums und dem Ein- oder Ausschalten der entsprechenden Halbleiter-Lichtquellen 4, die Zeitdauer für das Verändern der Breite und/oder der Ausrichtung des durch die Halbleiter-Lichtquellen 4 erzeugten Lichtkegels, etc. kürzer gewählt ist, als bei einem Parametersatz, der dem Fahrprofil "komfortbetonte Fahrweise" zugeordnet ist.

Auf diese Weise kann erreicht werden, dass bei einer sportlichen Fahrweise (einem sportlichen Fahrprofil) nach einem Abblenden des Fernlichts für das erneute Aufblenden des Fernlichtes (nach Vorhandensein eines Einschaltkriteriums) durch ein Kraftfahrzeug eine vergleichsweise kurze Zeit benötigt wird, so dass die zurückgelegte Strecke, in der das Fernlicht nicht aufgeblendet ist, nicht größer oder gegebenenfalls sogar kürzer ist als bei einem langsam fahrenden, komfortbetonten Fahrzeugführer.

In ähnlicher Weise kann bspw. zur Realisierung eines adaptiven Kurvenlichts bei dem einem sportlichen Fahrprofil zugeordneten Parametersatz vorgesehen sein, dass der Lichtkegel des Matrix-Scheinwerfers 2 im Bereich der Kurvenaußenseite rascher gedimmt oder ausgeschalten wird, als dies bei dem Parametersatz für das "komfortbetonte Fahrprofil" der Fall ist. Weiter kann bspw. bei der Lichtfunktion "Ortschaftserkennung" bzw. "Ortschaftserkennungslicht" bei dem Parametersatz für das "sportliche Fahrprofil" der "Vorhangeffekt" erst kürzer vor bzw. nach einem Ortseingangs- oder Ortsausgangs-Schild erfolgen und kann die Zeitdauer für die Durchführung des "Vorhangeffekts" kürzer sein, als dies bei dem Parametersatz für das "komfortbetonten Fahrprofil" der Fall ist.

Durch die vorliegende Erfindung wird in vorteilhafter Weise auch den Bedürfnissen von verschiedenen Fahrern Rechnung getragen. Während ein eher langsameres Anpassen des Fahrlichts durch das erfindungsgemäße System 1 eher den Vorstellungen eines komfortbetonten Fahrzeugführers entspricht, wünscht sich ein eher sportlich eingestellter Fahrer in der Regel eine "spontane" Reaktion seines Fahrzeugs. Diesen unterschiedlichen Bedürfnissen kann durch die vorliegende Erfindung in vorteilhafter Weise Rechnung getragen werden.

Das Ziel, dass das Steuergerät 3 zur Realisierung von wenigstens einer Lichtfunktion je nach Fahrprofil auf einen geeigneten Parametersatz zurückgreifen kann, kann auf verschiedenen Wegen erreicht werden. Beispielsweise können in dem Steuergerät 3 mehrere verschiedene Fahrprofile und jedem Fahrprofil wenigstens ein zugeordneter Parametersatz gespeichert sein.

Es kann aber auch vorgesehen sein, dass in dem Steuergerät 3 nur ein "Standard-Parametersatz" gespeichert ist und durch das Steuergerät 3 je nach ausgewähltem oder erkannten Fahrprofil nach vorgebbaren Kriterien eine Veränderung von wenigstens einem in dem Parametersatz vorhandenen Parameter vorgenommen wird und dann der entsprechend veränderte Parametersatz verwendet wird.

Auch die Auswahl oder das Erkennen eines Fahrprofils kann auf unterschiedliche Art und Weise erfolgen.

Beispielsweise können in dem Steuergerät 3 mehrere verschiedene Fahrprofile gespeichert und durch den Fahrzeugführer durch eine Bedienhandlung, bspw. mithilfe eines berührungs- oder näherungsempfindlichen Bildschirms, eines Dreh-/Drückstellers, und/oder einer Sprachsteuerung, ein Fahrprofil auswählbar sein. Erfindungsgemäß sind bei dem erfindungsgemäßen System 1 die verschiedene Fahrprofile verschiedenen Fahrzeugabstimmungen zugeordnet und ist durch den Fahrzeugführer durch eine Bedienhandlung bei einem Fahrzeugabstimmungs-Assistenzsystems eine Fahrzeugabstimmung auswählbar.

Derartige Fahrzeugabstimmungs-Assistenzsysteme sind bereits bei einer Reihe von Fahrzeugen von verschiedenen Herstellern verfügbar (z.B. AUDI Drive Select-System; BMW Fahrerlebnisschalter; etc.). So kann bspw. beim AUDI Drive Select-System ein Fahrzeugführer die Charakteristik derjenigen Technik-Komponenten, die das Fahrerlebnis bestimmen, wie Motor, Getriebe, Lenkung, Dämpfung und/oder das Sportdifferenzial, jederzeit an seine persönlichen Vorlieben ("comfort", "auto" oder "dynamic") von ausgeprägt komfortabel bis betont sportlich anpassen.

Ergänzend dazu kann bei dem erfindungsgemäßen System 1 vorgesehen sein, dass das Steuergerät 3 dazu eingerichtet ist, das Fahrprofil des Fahrzeugführers während einer Fahrt des Kraftfahrzeugs aufgrund von Daten von wenigstens einer fahrzeugseitigen Einrichtung zu erkennen. Hierzu können bspw. durch das Steuergerät von fahrzeugseitigen Steuergeräten und/oder fahrzeugseitigen Sensoriken eine oder mehrere der oben im Zusammenhang mit den verschiedenen Fahrprofilen bzw. Fahrstilen erwähnten Kenngrößen erfasst und ausgewertet werden und aufgrund der erfassten Kenngrößen auf ein aktuell gegebenes Fahrprofil bzw. einen aktuell gewählten Fahrstil des Fahrzeugführers geschlossen werden.

Auf Grundlage des so ermittelten Fahrprofils kann dann ein entsprechender Parametersatz ausgewählt oder generiert und zur Steuerung des erfindungsgemäßen Systems 1 verwendet werden.

Ein Erkennen eines Fahrprofils und ein Verwenden eines gegebenenfalls geänderten Parametersatzes können auch in den Fällen sinnvoll sein, in denen ein Fahrzeugführer eine Fahrzeugabstimmung ausgewählt hat. Es können sich nämlich die Fahrbedingungen während einer Fahrt ändern, bspw. von einer wenig befahrenen Landstraße zu einem dichteren Berufsverkehr, durch die sich ein Fahrzeugführer veranlasst sieht, bspw. die ursprünglich gewählte sportliche Fahrweise in eine eher gleichmäßigere, vorausschauende Fahrweise zu ändern. In einem solchen Fall würde die ursprüngliche Steuerung des erfindungsgemäßen Systems nicht mehr zu der aktuell erforderlichen oder gewählten Fahrweise passen.

Der in dem erfindungsgemäßen System 1 vorgesehene Fahrzeugscheinwerfer 2 weist pro vorgegebenem, horizontalem Winkelbereich zur Erzeugung eines Fahrlichts wenigstens eine Halbleiter-Lichtquelle 4 auf. Eine Halbleiter-Lichtquelle 4 ist bevorzugt ausgebildet durch eine oder mehrere lichtemittierende Dioden, eine oder mehrere Laserlicht-Dioden oder eine Kombination davon.

Einzelne lichtemittierende Dioden und Laserlicht-Dioden können als diskrete Bauteile vorgesehen sein, es können mehrere lichtemittierende Dioden und/oder Laser-Dioden aber auch auf einem Chip gemeinsam betrieben werden. Damit steht auf kleinem Bauraum eine große Bandbreite an emittierter Lichtleistung zur Verfügung.

Für die für Fahrzeugscheinwerfer 2 erforderlichen oder gewünschten Licht-Wellenlängen sind lichtemittierende Dioden und Laser-Dioden erhältlich, gegebenenfalls können RGB-LEDs und/oder RGB-Laser-Dioden, und/oder eine Kombination davon im Fahrzeugscheinwerfer 2 vorgesehen sein.

Der Fahrzeugscheinwerfer 2 kann Halbleiter-Lichtquellen 4 nicht nur für die Realisierung der oben erwähnten Lichtfunktionen aufweisen, sondern auch zur Realisierung eines Abblendlichts, Abbiegelichts, Standlichts, Blinklichts, etc. Auch kann der Fahrzeugscheinwerfer 2 des Systems 1 auch andere als Halbleiter-Lichtquellen (bspw. Halogen-Lichtquellen, Gasentladungs-Lichtquellen) aufweisen. Erfindungsgemäß ist auch die Bauweise des Fahrzeugscheinwerfers 2 nicht besonders beschränkt und es kann sich beispielsweise um einen Fahrzeugscheinwerfer 2 vom Reflexionstyp oder um einen vom Projektionstyp handeln.

Sofern in der vorliegenden Anmeldung von einem Ein- und Ausschalten von (einer) Halbleiter-Lichtquelle(n) gesprochen wird, ist damit nicht nur ein Einschalten ausgehend von einem ausgeschalteten Zustand in einen lichtabstrahlenden Zustand oder ein Ausschalten ausgehend von einem lichtabstrahlenden Zustand in einen ausgeschalteten Zustand zu verstehen, sondern auch ein Auf- und Abdimmen. Bei einem Auf- und Abdimmen nimmt über einen vorgebbaren Zeitraum die Leuchtdichte (Helligkeit) einer/der Halbleiter-Lichtquelle(n) 4 zu- oder ab. Ein Aufdimmen kann von einem nicht Licht abstrahlenden oder Licht abstrahlenden Zustand einer/der Halbleiter-Lichtquelle(n) 4 ausgehen, ein Abdimmen kann eine Abnahme der Leuchtdichte (Helligkeit) einer/der Halbleiter-Lichtquelle(n) 4 von einer höheren Leuchtdichte (Helligkeit) zu einer niedrigeren Leuchtdichte (Helligkeit) umfassen, aber auch eine Abnahme der Leuchtdichte (Helligkeit) einer/der Halbleiter-Lichtquelle(n) 4 von einer höheren Leuchtdichte (Helligkeit) bis zu einem nicht Licht abstrahlenden Zustand.

Die vorliegende Erfindung umfasst auch ein Verfahren zur Steuerung eines Fahrzeugscheinwerfers 2 zur Beleuchtung eines Umfelds eines Kraftfahrzeugs durch ein System 1 mit einem Fahrzeugscheinwerfer 2 und einem damit verbundenen Steuergerät 3, in dem mehrere verschiedene Fahrprofile gespeichert sind, die verschiedenen Fahrzeugabstimmungen zugeordnet sind, wobei der Fahrzeugscheinwerfer 2 wenigstens eine Halbleiter-Lichtquelle 4 pro vorgegebenem, horizontalem Winkelbereich zur Erzeugung eines Fahrlichts aufweist und das Steuergerät 3 dazu eingerichtet ist, Halbleiter-Lichtquellen 4 zur Realisierung von wenigstens einer Lichtfunktion des Fahrlichts individuell einschalten und ausschalten zu können.

Das erfindungsgemäße Verfahren umfasst wenigstens die Schritte:
- Auswählen einer Fahrzeugabstimmung durch den Fahrzeugführer durch eine Bedienhandlung bei einem Fahrzeugabstimmungs-Assistenzsystems,
- Auswählen eines dem ausgewählten Fahrprofil zugeordneten Parametersatz mit Parametern für wenigstens den Vorgang des Ein- und Ausschaltens von Halbleiter-Lichtquellen 4 durch das Steuergerät 3, und
- Ein- und Ausschalten von Halbleiter-Lichtquellen 4 des Fahrzeugscheinwerfers 2 durch das Steuergerät 3 während einer Fahrt des Kraftfahrzeugs auf Grundlage der in dem dem ausgewählten Fahrprofil zugeordneten Parametersatz enthaltenen Parametern für das Einschalten und Ausschalten von Halbleiter-Lichtquellen zur Realisierung der Lichtfunktion(en) von wenigstens einem adaptiven Fernlicht, einem adaptiven Ortschaftserkennungslicht, einem adaptiven Kurvenlicht, einer adaptiven Leuchtweitenregulierung und/oder einem adaptiven Markierungslicht.

In vorteilhafter Weise unterscheiden sich bei dem erfindungsgemäßen Verfahren die verschiedenen, jeweils einem Fahrprofil zugeordneten Parametersätze in wenigstens einem Parameter voneinander.

Vorteilhafte Weiterbildungen des Verfahrens, die von der vorliegenden Erfindung umfasst sind, ergeben sich für einen Fachmann ohne Weiteres aus der Offenbarung des erfindungsgemäßen Systems 1, seiner vorteilhaften Weiterbildungen und Ausführungsformen, die entsprechend auch für das erfindungsgemäße Verfahren gelten.

Die für das erfindungsgemäße System 1 und das erfindungsgemäße Verfahren sowie deren vorteilhafte Weiterbildungen und Ausgestaltungen erforderlichen und geeigneten Bauelemente, Baugruppen, Einrichtungen, Vorrichtungen und Elemente sowie deren mögliches Zusammenwirken sind einem Fachmann bekannt, so dass in der vorliegenden Anmeldung hierauf nicht näher eingegangen zu werden braucht.

Zusammenfassend kann man festhalten, dass durch die vorliegende Erfindung ein Fahrzeugführer beispielsweise mit Hilfe eines Fahrzeugabstimmungs-Assistenzsystems (z.B. AUDI Drive Select-System) ein Fahrprogramm auswählen kann und hierdurch auch die Dynamik, etc. im Lichtsteuergerät 3 umgeschaltet wird. Ergänzend zu einer manuellen Umschaltung durch Auswahl eines Fahrprogramms durch den Fahrzeugführer kann eine Umschaltung durch das Lichtsteuergerät 3 erfolgen. Hierzu können im Lichtsteuergerät 3 Algorithmen hinterlegt sein oder ein geeignetes Computerprogramm ablaufen, mittels denen/dem über eine Art Fahrerindex die aktuelle Fahrweise (Fahrstil, Fahrprofil) des Fahrzeugführers ermittelt werden kann. Nach Festlegung bzw. Ermittlung der Fahrweise des Fahrzeugführers werden durch das Lichtsteuergerät 3 jeweils zu der Fahrweise des Fahrzeugführers passende Kennlinien für die verschiedenen Lichtfunktionen angewandt. Die Steuerung des Fahrzeugscheinwerfers 2 bzw. der Funktionen des Lichtsystems wird hierdurch an den Fahrstil des Fahrzeugführers angepasst.

## Patentansprüche

1. System (1) mit einem Fahrzeugscheinwerfer (2) zur Beleuchtung eines Umfelds eines Kraftfahrzeugs und einem mit dem Fahrzeugscheinwerfer (2) verbundenen Steuergerät (3), wobei der Fahrzeugscheinwerfer (2) wenigstens eine Halbleiter-Lichtquelle (4) pro vorgegebenem, horizontalem Winkelbereich zur Erzeugung eines Fahrlichts aufweist und das Steuergerät (3) dazu eingerichtet ist, Halbleiter-Lichtquellen (4) zur Realisierung von wenigstens einer Lichtfunktion des Fahrlichts individuell einschalten/aufdimmen und ausschalten/abdimmen zu können, wobei das Steuergerät (3) weiter dazu eingerichtet ist, verschiedenen Fahrprofilen zugeordnete Parametersätze mit Parametern für wenigstens den Vorgang des Einschaltens/Aufdimmens und Ausschaltens/Abdimmens von Halbleiter-Lichtquellen (4) zur Realisierung von wenigstens einer Lichtfunktion zu verwenden, **dadurch gekennzeichnet, dass** in dem Steuergerät (3) mehrere verschiedene Fahrprofile gespeichert sind, die verschiedenen Fahrzeugabstimmungen zugeordnet sind, und durch den Fahrzeugführer durch eine Bedienhandlung bei einem Fahrzeugabstimmungs-Assistenzsystem eine Fahrzeugabstimmung auswählbar ist.

2. System (1) gemäß Anspruch 1, **dadurch gekennzeichnet, dass** verschiedenen Fahrprofilen zugeordnete Parametersätze durch das Steuergerät (3) generierbar sind.

3. System (1) gemäß Anspruch 1 oder 2, **dadurch gekennzeichnet, dass** in den Parametersätzen als Parameter zur Realisierung von wenigstens einer Lichtfunktion wenigstens der Zeitraum zwischen dem Vorhandensein eines Einschaltkriteriums und dem Einschalten/Aufdimmen von Halbleiter-Lichtquellen (4) und/oder der Zeitraum zwischen dem Vorhandensein eines Ausschaltkriteriums und dem Ausschalten/Abdimmen von Halbleiter-Lichtquellen enthalten sind.

4. System (1) gemäß einem der vorhergehenden Ansprüche,
**dadurch gekennzeichnet, dass**
sich die verschiedenen, jeweils einem Fahrprofil zugeordneten Parametersätze in wenigstens einem Parameter voneinander unterscheiden.

5. System (1) gemäß einem der vorhergehenden Ansprüche,
**dadurch gekennzeichnet, dass**
das Steuergerät (3) dazu eingerichtet ist, das Fahrprofil des Fahrzeugführers während einer Fahrt des Kraftfahrzeugs aufgrund von Daten von wenigstens einer fahrzeugseitigen Einrichtung zu erkennen.

6. System (1) gemäß einem der vorhergehenden Ansprüche,
**dadurch gekennzeichnet, dass**
durch das System (1) als die wenigstens eine Lichtfunktion wenigstens ein adaptives Fernlicht, ein adaptives Ortschaftserkennungslicht, ein adaptives Kurvenlicht, eine adaptive Leuchtweitenregulierung und/oder ein adaptives Markierungslicht realisierbar ist.

7. Verfahren zur Steuerung eines Fahrzeugscheinwerfers (2) zur Beleuchtung eines Umfelds eines Kraftfahrzeugs durch ein System (1) mit einem Fahrzeugscheinwerfer (2) und einem damit verbundenen Steuergerät (3), in dem mehrere verschiedene Fahrprofile gespeichert sind, die verschiedenen Fahrzeugabstimmungen zugeordnet sind, wobei der Fahrzeugscheinwerfer (2) wenigstens eine Halbleiter-Lichtquelle pro vorgegebenem, horizontalem Winkelbereich zur Erzeugung eines Fahrlichts aufweist und das Steuergerät (3) dazu eingerichtet ist, Halbleiter-Lichtquellen zur Realisierung von wenigstens einer Lichtfunktion des Fahrlichts individuell einschalten/aufdimmen und ausschalten/abdimmen zu können,
**dadurch gekennzeichnet, dass** es die Schritte umfasst:
Auswählen einer Fahrzeugabstimmung durch den Fahrzeugführer durch eine Bedienhandlung bei einem Fahrzeugabstimmungs-Assistenzsystems,
Auswählen eines dem ausgewählten Fahrprofil zugeordneten Parametersatz mit Parametern für wenigstens den Vorgang des Einschaltens/Aufdimmens und Ausschaltens/Abdimmens von Halbleiter-Lichtquellen (4) durch das Steuergerät (3), und
Einschalten/Aufdimmen und Ausschalten/Abdimmen von Halbleiter-Lichtquellen (4) des Fahrzeugscheinwerfers (2) durch das Steuergerät (3) während einer Fahrt des Kraftfahrzeugs auf Grundlage der in dem dem ausgewählten Fahrprofil zugeordneten Parametersatz enthaltenen Parametern für das Einschalten/Aufdimmen und Ausschalten/Abdimmen von Halbleiter-Lichtquellen zur Realisierung der Lichtfunktion(en) von wenigstens einem adaptiven Fernlicht, einem adaptiven Ortschaftserkennungslicht, einem adaptiven Kurvenlicht, einer adaptiven Leuchtweitenregulierung und/oder einem adaptiven Markierungslicht.

8. Verfahren gemäß Anspruch 7,
wobei sich die verschiedenen, jeweils einem Fahrprofil zugeordneten Parametersätze in wenigstens einem Parameter voneinander unterscheiden.

## Claims

1. System (1) having a vehicle headlamp (2) for illuminating an environment of a motor vehicle and having a control device (3) connected with the vehicle headlamp (2), wherein the vehicle headlamp (2) has at least one semiconductor light source (4) per predetermined horizontal angle range for generating a driving light and the control device (3) is configured to be able to switch-on/dim-up and switch-off/dim-down individually semiconductor light sources (4) for realising at least one light function of the driving light,
wherein
the control device (3) is furthermore configured to use parameter sets, assigned to different drive profiles, having parameters for at least the procedure of the switching-on/dimming-up and switching-off/dimming-down of semiconductor sources (4) for realising at least one light function, **characterised in that**
in the control device (3) are stored several different drive profiles which are assigned to different vehicle set-ups, and a vehicle set-up is selectable by the vehicle operator by means of an operator action in a vehicle set-up assistance system.

2. System (1) according to claim 1,
**characterised in that**
parameter sets assigned to different drive profiles are able to be generated by the control device (3).

3. System (1) according to claim 1 or 2,
**characterised in that**
in the parameter sets as parameter for realising at least one light function are contained at least the period of time between the presence of a switching-on criterion and the switching-on/dimming-up of semiconductor light sources (4) and/or the period of time between the presence of a switching-off criterion and the switching-off/dimming-down of semiconductor light sources.

4. System (1) according to any of the preceding claims,
**characterised in that**
the different parameter sets assigned in each case to one drive profile differ from one another in at least one parameter.

5. System (1) according to any of the preceding claims,
**characterised in that**
the control device (3) is configured to recognise the drive profile of the vehicle operator during a driving of the motor vehicle based on data from at least one vehicle-side device.

6. System (1) according to any of the preceding claims,
**characterised in that**
by means of the system (1) at least one adaptive main beam, one adaptive town recognition light, one adaptive curve light, one adaptive illumination range regulation device and/or one adaptive highlighting light is able to be realised as the at least one light function.

7. Method for controlling a vehicle headlamp (2) for illuminating an environment of a motor vehicle by means of a system (1) having a vehicle headlamp (2) and a control device (3) connected therewith, in which several different drive profiles are stored which are assigned to different vehicle set-ups, wherein the vehicle headlamp (2) has at least one semiconductor light source per predetermined horizontal angle range for generating a driving light and the control device (3) is configured to be able to switch-on/dim-up and switch-off/dim-down individually semiconductor light sources for realising at least one light function of the driving light,
**characterised in that** it comprises the steps:
selection of a vehicle set-up on the part of the vehicle operator by means of an operator action in a vehicle set-up assistance system,
selection of a parameter set assigned to the selected drive profile having parameters for at least the procedure of the switching-on/dimming-up and switching-off/dimming-down of semiconductor sources (4) by means of the control device (3) and
switching-on/dimming-up and switching-off/dimming-down of semiconductor sources (4) of the vehicle headlamp (2) by means of the control device (3) during a driving of the motor vehicle on the basis of the parameters, contained in the parameter set assigned to the selected drive profile, for the switching-on/dimming-up and switching-off/dimming-down of semiconductor sources for the realising of the light function(s) of at least one adaptive main beam, one adaptive town recognition light, one adaptive curve light, one adaptive illumination range regulation device and/or one adaptive highlighting light.

8. Method according to claim 7,
wherein the different parameter sets which are in each case assigned to one drive profile differ from one another in at least one parameter.

## Revendications

1. Système (1) avec un phare de véhicule (2) pour l'éclairage d'un environnement d'un véhicule automobile et un appareil de commande (3) relié au phare de véhicule (2), dans lequel le phare de véhicule (2) présente au moins une source de lumière à semi-conducteur (4) par plage angulaire horizontale prédéfinie pour la génération de feux de circulation et l'appareil de commande (3) est aménagé pour pouvoir allumer/augmenter et éteindre/diminuer individuellement des sources de lumière à semi-conducteur (4) pour la réalisation d'au moins une fonction d'éclairage des feux de circulation,
dans lequel
l'appareil de commande (3) est aménagé en outre pour utiliser des jeux de paramètres associés à différents profils de conduite avec des paramètres pour au moins l'opération de l'allumage/augmentation et de l'extinction/diminution de sources de lumière à semi-conducteur (4) pour la réalisation d'au moins une fonction d'éclairage, **caractérisé en ce que**
dans l'appareil de commande (3), plusieurs profils de conduite différents sont mémorisés, qui sont associés à différents réglages de véhicule, et un réglage de véhicule peut être sélectionné par le conducteur de véhicule par une opération de commande dans un système d'assistance de réglage de véhicule.

2. Système (1) selon la revendication 1,
**caractérisé en ce que**
des jeux de paramètres associés à différents profils de conduite peuvent être générés par l'appareil de commande (3).

3. Système (1) selon la revendication 1 ou 2,
**caractérisé en ce que**
au moins la période entre la présence d'un critère d'allumage et l'allumage/augmentation de sources de lumière à semi-conducteur (4) et/ou la période entre la présence d'un critère d'extinction et l'extinction/diminution de sources de lumière à semi-conducteur sont contenues dans les jeux de paramètres en tant que paramètre pour la réalisation d'au moins une fonction d'éclairage.

4. Système (1) selon l'une quelconque des revendications précédentes,
**caractérisé en ce que**
les différents jeux de paramètres associés à respectivement un profil de conduite se distinguent les uns des autres en au moins un paramètre.

5. Système (1) selon l'une quelconque des revendications précédentes,
**caractérisé en ce que**
l'appareil de commande (3) est aménagé pour détecter le profil de conduite du conducteur de véhicule pendant un trajet du véhicule automobile sur la base de données d'au moins un dispositif côté véhicule.

6. Système (1) selon l'une quelconque des revendications précédentes,
**caractérisé en ce que**
au moins un feu de route adaptatif, un éclairage de détection de localité adaptatif, un éclairage de virage adaptatif, une régulation de portée d'éclairage adaptative et/ou un éclairage de marquage adaptatif peut être réalisé par le système (1) en tant que l'au moins une fonction d'éclairage.

7. Procédé de commande d'un phare de véhicule (2) pour l'éclairage d'un environnement d'un véhicule automobile par un système (1) avec un phare de véhicule (2) et un appareil de commande (3) relié à celui-ci, dans lequel plusieurs profils de conduite différents sont mémorisés, qui sont associés à différents réglages de véhicule, dans lequel le phare de véhicule (2) présente au moins une source de lumière à semi-conducteur par plage angulaire horizontale prédéfinie pour la génération de feux de circulation et l'appareil de commande (3) est aménagé pour pouvoir allumer/augmenter et éteindre/diminuer individuellement des sources de lumière à semi-conducteur pour la réalisation d'au moins une fonction d'éclairage des feux de circulation,
**caractérisé en ce qu'**il comprend les étapes de :
sélection d'un réglage de véhicule par le conducteur de véhicule par une opération de commande dans un système d'assistance de réglage de véhicule,
sélection d'un jeu de paramètres associé au profil de conduite sélectionné avec des paramètres pour au moins l'opération de l'allumage/augmentation et de l'extinction/diminution de sources de lumière à semi-conducteur (4) par l'appareil de commande (3), et
l'allumage/augmentation et l'extinction/diminution de sources de lumière à semi-conducteur (4) du phare de véhicule (2) par l'appareil de commande (3) pendant un trajet du véhicule automobile sur la base des paramètres contenus dans le jeu de paramètres associé au profil de conduite sélectionné pour l'allumage/augmentation et l'extinction/diminution de sources de lumière à semi-conducteur pour la réalisation de la(des) fonction(s) d'éclairage d'au moins un feu de route adaptatif, un éclairage de détection de localité adaptatif, un éclairage de virage adaptatif, une régulation de portée d'éclairage adaptative et/ou un éclairage de marquage adaptatif.

8. Procédé selon la revendication 7,
dans lequel les différents jeux de paramètres associés à respectivement un profil de conduite se distinguent les uns des autres en au moins un paramètre.
